# EUROPEAN PATENT APPLICATION

(11) **EP 4 693 125 A1**
(43) Date of publication of application: **11.02.2026**
(21) Application number: 24936910.9
(22) Date of filing: 26.04.2024
(51) Int. Cl.: G06Q 10/047

(54) **ROUTE PLAN SEARCH METHOD AND COMPUTATION DEVICE**

(71) Applicant: Amoeba Energy Co., Ltd., Tokyo 108-0075 (JP)
(72) Inventor: AONO, Masashi, Tokyo 108-0075 (JP); OHKODA, Kaori, Tokyo 108-0075 (JP)
(74) Representative: Herre, Peter
(86) International application number: PCT/JP2024/016498
(87) International publication number: WO 2025/224994

(57) **Abstract**

This technology is, for example, a method for searching for a path plan for moving a moving object by a computer, the method comprising: determining a first initial position at which a first moving object capable of moving at a first speed exists at a first time and a first arrival position at which the first moving object to exist at a second time which is later than the first time, respectively; determining a first plurality of path plans which allow the first moving object to move from the first initial position at the first time to the first arrival position at the second time, the first plurality of path plans being representable by pairs of time and position; determining positions which are not included in any of the first plurality of path plans at each time; and determining at least one first movement position at a third time between the first time and the second time, the first movement position being a position to which the first moving object can move after a predetermined time elapsed from the third time, the first movement position excluding positions not included in any of the first plurality of the first path plans.

## Description

### [Field]

The present technology relates to a method and a processor for searching for a path plan for moving a moving object.

### [Background]

When goods, parts, products, or the like are conveyed by using an unmanned vehicle or an unmanned robot (hereinafter, both are also collectively referred to as an automatic guided vehicle or an AGV) in a warehouse, a factory, or the like, a path of movement of the AGV is calculated in advance and optimized.

WO 2022/097460 A1 publication discloses a technology for the purpose of finding an optimal solution to an optimization problem at high speed and efficiently by a simple optimization algorithm, having a plurality of data generation units, a fluctuation setting unit that supplies a fluctuation probability to the data generation units, sets the frequency of appearance of data generated by the data generation units to be non-uniform, and sets the frequency of appearance of a specific variable to a value different from the frequency of appearance of other variables, a plurality of data conversion units that read the data generated by the data generation units and convert the data into information, an output adjustment unit that transmits an output adjustment signal to the data generation units or the output adjustment signal and the value of the fluctuation probability, and a feedback control unit that repeatedly controls the operation of transmitting the output adjustment signal to the data generation units or the output adjustment signal and the value of the fluctuation probability when the optimal solution is not obtained.

When hundreds or thousands of AGVs are used in accordance with an increase in the scale of warehouses, factories, and the like, congestion frequently occurs between the AGVs, a conveyance plan or a process becomes uncertain, and the throughput of conveyance or production may decrease.

### [Prior Art Documents]

### [Patent Documents]

[Patent Document 1] WO 2022 / 097460 Pamphlet
[Patent Document 2] Japanese Patent No. 6029048
[Patent Document 3] Japanese Patent No. 6011928
[Patent Document 4] Japanese Laid-Open Patent Publication No. 2015-184829
[Patent Document 5] Japanese Laid-Open Patent Publication No. 2019-198902
[Patent Document 6] Japanese Laid-Open Patent Publication No. 2019-198903
[Patent Document 7] WO 2019 / 017412 Pamphlet
[Patent Document 8] Japanese Laid-Open Patent Publication No. 2018-166194

### [Non-patent literature]

[Non-Patent Document 1] M. Aono, et al., Proceedings of NOLTA 2012, 586-589 (2012)
[Non-Patent Document 2] Kasai, S., Aono, M., and Naruse, M.: Amoeba-inspired computing architecture implemented using charge dynamics in parallel capacitance network, Appl. Phys. Lett., Vol. 103, 163703 (2013)
[Non-Patent Document 3] Ryo WAKAMIYA, Seiya KASAI, Masashi AONO, Makoto NARUSE, Hiroyoshi MIWA, "Electronic circuit implementation of amoeba-inspired solution search algorithm for optimization problems," IEICE Technical Report 114 (442) pp. 81-85 (2015)
[Non-Patent Document 4] A. H. Ngoc Nguyen, M. Aono, Y. Hara-Azumi, "FPGA-Based amoeba-inspired SAT solver for cyber-physical systems," ACM/IEEE International Conference on Cyber-Physical Systems (ICCPS), 316-317 (2019).
[Non-Patent Document 5] A. H. Ngoc Nguyen, M. Aono, Y. Hara-Azumi, "FPGA-based hardware/software co-design of a bio-inspired SAT solver," IEEE Access, DOI: 10.1109/ACCESS. 2020.2980008 (2020)
[Non-Patent Document 6] Y. J. Yan, H. Amano, M. Aono, K. Ohkoda, S. Fukuda, K. Saito, S. Kasai, "Resource-saving FPGA Implementation of the Satisfiability Problem Solver: AmoebaSATslim," FPT 2021:1-5 (2021)
[Non-Patent Document 7] P. Huang, K. Wei, H. Amano, K. Ohkoda, M. Aono, Implementing Multi Agent Path Finding Algorithm for Smart Factory on a Multi-FPGA system, IEICE Technical Report (Web), 174 (RECONF2022 26-41), pp. 17-18 (2022)
[Non-Patent Document 8] P. Huang, K. Wei, H. Amano, K. Ohkoda, M. Aono, Multi-board FPGA Implementation to Solve the Satisfiability Problem for Multi-Agent Path Finding in Smart Factory, 2022 Tenth International Symposium on Computing and Networking Workshops (CANDAR), pp. 406-410 (2022)
[Non-Patent Document 9] T. Okuyama, H. Amano, K. Ohkoda, M. Aono, "Efficient FPGA Implementation of Amoeba-inspired SAT Solver with Feedback and Bounceback Control: Harnessing Variable-Level Parallelism for Large-Scale Problem Solving in Edge Computing," HEART 2023 (2023)
[Non-Patent Document 10] N. Takeuchi, M. Aono, Y. Hara-Azumi and C. L. Ayala, "A Circuit-Level Amoeba-Inspired SAT Solver," in IEEE Transactions on Circuits and Systems II: Express Briefs, vol. 67, no. 10, pp. 2139-2143 (2020)
[Non-Patent Document 11] K. Hara, N. Takeuchi, M. Aono, Y. Hara-Azumi, "Amoeba-inspired stochastic hardware SAT solver," International Symposium on Quality Electronic Design (ISQED), (2019)
[Non-patent Document 12] Masashi AONO, Yusei KUJIRAI, Hiroki NOZAKI, "Amoeba-inspired Computing Paradigm for Bridging the Gap between Cyber and Physical Spaces," Journal of the Japanese Society for Artificial Intelligence, Vol. 33 (5), pp. 56-569 (2018)
[Non-Patent Document 13] L. Zhu, S.-J. Kim, M. Hara, M. Aono, "Remarkable problem-solving ability of unicellular amoeboid organism and its mechanism," Royal Society Open Science 5:180396 (2018)
[Non-Patent Document 14] Saito, Kasai, Aono et al., The Society of Applied Physics, Poster Presentation (2019)
[Non-Patent Document 15] K. Saito, M. Aono, S. Kasai, "Amoeba-inspired analog electronic computing system integrating resistance crossbar for solving the travelling salesman problem," Scientific Reports 10, 20772 (2020)
[Non-Patent Document 16] M. Aono, "Amoeba-inspired combinatorial optimization machines," Japanese Journal of Applied Physics 59, 060502, (2020)

### [Summary]

### [Technical Problem]

It is desired to provide a method and a processor for searching a path plan for minimizing the occurrence of congestion due to the concentration of traffic such as the loading / unloading of goods or the like, waiting due to early arrival, and the merging of paths even when many AGVs are used.

It is desired to provide a method and a processor capable of reducing the amount of calculation of a path search, shortening the time required for the path search, searching more paths, or a combination thereof in determining a path plan.

When a path is searched for in time for a predetermined time in determining a path plan, it is possible that a traffic jam of a plurality of AGVs occurs at or near a destination point where goods are loaded or unloaded.

In addition, it is possible that the occurrence of traffic congestion causes a delay in the AGV that conveys the goods or the like with high priority or high urgency in reaching the destination point.

Furthermore, there may be a case where the time and order of arrival of the goods or the like are to be specified in advance.

It is desired to eliminate or reduce traffic jams caused by AGVs and to transport necessary goods at the required time.

In determining a path plan, it is desired to search for a path that will arrive exactly at a predetermined time.

### [Solution to Problem]

This technology includes, for example, a method for searching for a path plan for moving a moving object by a computer, the method comprising: determining a first initial position at which a first moving object capable of moving at a first speed exists at a first time and a first arrival position at which the first moving object to exist at a second time which is later than the first time, respectively; determining a first plurality of path plans which allow the first moving object to move from the first initial position at the first time to the first arrival position at the second time, the first plurality of path plans being representable by pairs of time and position; determining positions which are not included in any of the first plurality of path plans at each time; and determining at least one first movement position at a third time between the first time and the second time, the first movement position being a position to which the first moving object can move after a predetermined time elapsed from the third time, the first movement position excluding positions not included in any of the first plurality of the first path plans.

### [Brief Description of Drawings]

FIG. 1 illustrates a moving object according to an embodiment of the present technology.
FIG. 2 is a plan view showing paths along which a plurality of moving objects can move according to an embodiment of the present technology.
FIG. 3 is a flowchart illustrating a path planning search method according to an embodiment of the present technology.
FIG. 4 is a flowchart illustrating a path plan search method for moving a plurality of moving objects according to an embodiment of the present technology.

### [Description of Embodiments]

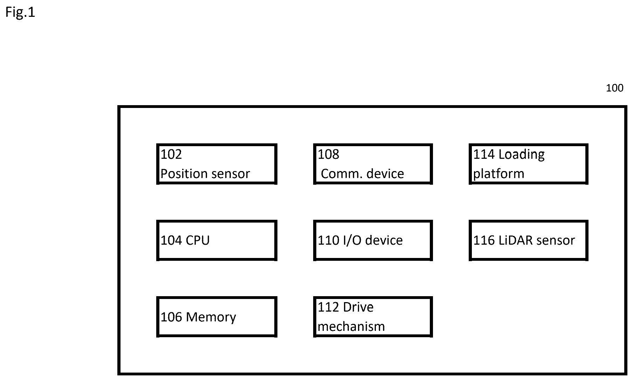

FIG. 1 shows a moving object 100 according to an embodiment of the present technology.

The moving object 100 may include a position sensor 102, a central processing unit (CPU) 104, a memory 106, and a communication device 108, an input / output (I/O) device 110, a drive mechanism 112, a loading platform 114, and a LiDAR sensor 116. The moving object 100 may be an automatic transport vehicle capable of transporting articles, a wafer transport robot, a glass transport robot, an AGV, or an autonomous mobile robot (AMR) used in a transport system.

The position sensor 102 may be a global positioning system (GPS), a beacon, Bluetooth, RFID, a camera, or the like.

The CPU 104 executes instructions executable by a computer and may be a general-purpose processor or a dedicated processor. The dedicated processor may be, for example, a control unit of a hybrid optimal solution computing system described in WO 2022 / 097460.

Memory 106 may be volatile (e.g., register, cache, RAM), nonvolatile (e.g., ROM, EEPROM, flash memory), or a combination thereof.

The communication device 108 may be a wired communication device or a wireless communication device, and may be communicably connected to another computer via a network (not shown) configured by a wired or wireless communications or a combination thereof. The network may be the Internet, a local area network (LAN), or a wide area network (WAN).

The I/O device 110 may be a keyboard, a touch screen, a display, or a combination thereof, and may be communicatively coupled to the moving object 100 by wire or wireless.

The drive mechanism 112 may be a combination of a motor and wheels.

The loading platform 114 may be a platform for manually loading products or parts, or may be a platform for automatically loading products or parts by using a conveyor or a lifter.

The LiDAR (Light Detection And Ranging) sensor 116 may be an optical phase solid state LiDAR sensor, a MEMS solid state LiDAR sensor, or a mechanical rotation LiDAR sensor.

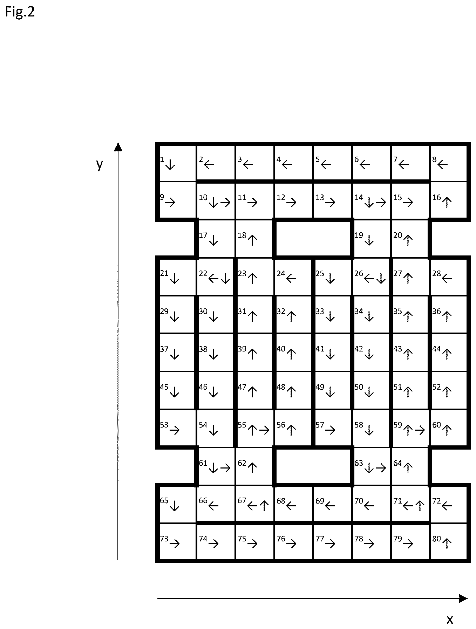

FIG. 2 shows a path on an x-y plane along which a plurality of moving objects according to an embodiment of the present technology can move.

The movable path may be a path applicable to a one-way type conveying rail. The movable path may be a path movable in both directions or in a free direction. Further, the movable path may be a plane or a space displayable in two-dimensional coordinates. The two-dimensional coordinates may be displayable in coarse-grained two-dimensional coordinates. The coarse-grained two-dimensional coordinates may be, for example, cells capable of being expressed as squares on a plane. The coarse-grained two-dimensional coordinates may be expressed as a plane by simplifying the three-dimensional space.

The movable path may be a space that can be displayed in three-dimensional coordinates. The three-dimensional coordinates may be displayed as coarse-grained three-dimensional coordinates. The coarse-grained two-dimensional coordinates may be, for example, cells capable of being expressed as cubes in a three-dimensional space.

The cells numbered in FIG. 2 indicate the positions where a single moving object can pass or stop at a particular time, and it is assumed that a plurality of moving objects cannot be located in the same cell at the same time.

The arrows in each cell in FIG. 2 indicate the direction in which the next movement is possible. In the present embodiment, the moving object is movable according to the following restrictions.
(1) The moving object (not shown) can move in one direction or either of the two branches from each cell. In FIG. 1, in cell 1 (c1), only the movement to cell 9 (c9) is possible, and the movement to cell 2 (c2) is not possible. In the cell 10 (c10), the movement to the cell 11 (c11) or the movement to the cell 17 (c17) is possible, and the movement to the cell 9 (c9) is not possible.
(2) The moving object can move at a predetermined speed in the direction indicated by the arrow of the cell, and can move to one adjacent cell per unit time.
(3) The moving object may move to an adjacent cell in the designated direction or may stop at the same cell during the lapse of one unit time (hereinafter also referred to as one step).

As an example, at the initial time t0, the moving object v1 is located in the cell 5 (c5), and the moving object v2 is located in the cell 6 (c6). These moving objects are moved so that the moving object v1 is located in the cell 49 (c49) and the moving object v2 is located in the cell 50 (c50) at time t16 (> t0).

Referring to FIG. 1, the moving object v1 (not shown) can move to the cell 4 (c4) at t1 after one step, and can move to the cell 3 (c3) at t2 after two steps. In this way, it can move through the cells 2, 1, 9, 10, 11, 12, 13, 14, 19, 26, 25, 33, 41 to the cell 49 (c49) at t16 after 16 steps. The path plan of the moving object v1 may be represented as a path A as pairs of time and position.

### Path A

(t0, c5), (t1, c4), (t2, c3), (t3, c2), (t4, c1), (t5, c9), (t6, c10), (t7, c11), (t8, c12), (t9, c13), (t10, c14), (t11, c19), (t12, c26), (t13, c25), (t14, c33), (t15, c41), (t16, c49)

The path plan of the moving object v1 may be a path different from the path A as shown in the following path B. In this case, the moving object v1 passes through the same cell a plurality of times.

### Path B

(t0, c5), (t1, c4), (t2, c3), (t3, c2), (t4, c1), (t5, c9), (t6, c10), (t7, c11), (t8, c12), (t9, c13), (t10, c14), (t11, c15), (t12, c16), (t13, c8), (t14, c7), (t15, c6), (t16, c5), (t17, c4), (t18, c3), (t19, c2), (t20, c1), (t21, c9), (t22, c10), (t23, c11), (t24, c12), (t25, c13), (t26, c14), (t27, c19), (t28, c26), (t29, c25), (t30, c33), (t31, c41), (t32, c49)

Further, the path plan of the moving object v1 may include a pause as shown in the path C below. In this case, the moving object v1 stops for one step elapsed time in the cell 14 (c14) and stops for three steps elapsed time in the cell 49 (c49).

### Path C

(t0, c5), (t1, c4), (t2, c3), (t3, c2), (t4, c1), (t5, c9), (t6, c10), (t7, c11), (8, c12), (t9, c13), (t10, c14), (t11, c14), (t12, c19), (t13, c26), (t14, c25), (t15, c33), (t16, c41), (t17, c49), (t18, c49) , (t19, c49) , (t20, c49)

Similarly, the moving object v2 (not shown) can move to the cell 5 (c5) at t1 after one step and can move to the cell 4 (c4) at t2 after two steps. In this way, it can move through the cells 3, 2, 1, 9, 10, 11, 12, 13, 14, 19, 26, 34, 42 to the cell 50 (c50) at t16 after 16 steps. The path plan of the moving object v2 may be represented as path D as pairs of time and position.

### Path D

(t0, c6), (t1, c5), (t2, c4), (t3, c3), (t4, c2), (t5, c1), (t6, c9), (t7, c10), (t8, c11), (t9, c12), (t10, c13), (t11, c14), (t12, c19), (t13, c26), (t14, c34), (t15, c42), (t16, c50)

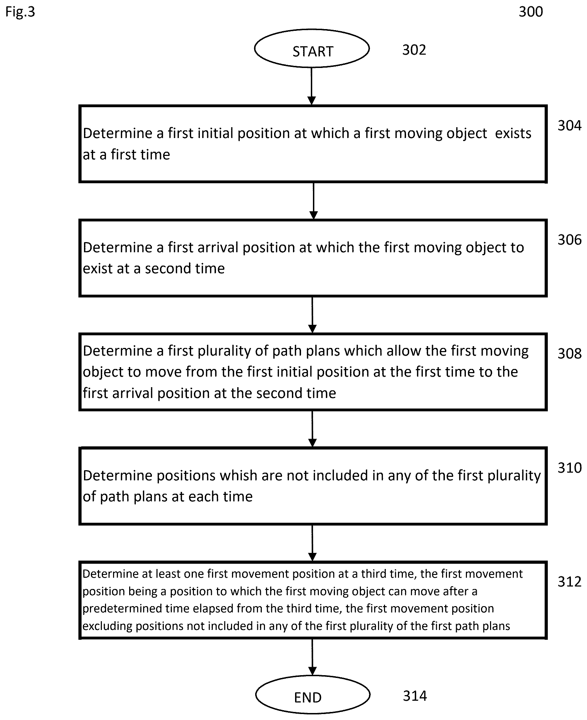

FIG. 3 shows a path plan search method according to an embodiment of the present technology.

The path plan search method 300 according to the embodiment of the present technology starts at step 302. At step 304, a first initial position where the first moving object v1 capable of moving at the first speed exists at a first time is determined. The first initial position may be determined by the CPU based on the position information recognized by the position sensor 102 of the first moving object v1. The first initial position may be previously input by the I/O device 110 or via the communication device 108. The first speed may be a speed at which the first moving object v1 normally moves, a maximum speed, or an average speed with acceleration and deceleration taken into account.

Next, at step 306, a first arrival position where the first moving object v1 to exist at a second time later than the first time is determined. The first arrival position may be previously input by the I/O device 110 or via the communication device 108. The arrival position may be a position where the moving object v1 loads or unloads articles.

Next, at step 308, a first plurality of path plans are determined in which the first moving object v1 can move from the first initial position at the first time to the first arrival position at the second time.

As the first plurality of path plans, the CPU 104 or other computers connected via the communication device 108 and a network search for all of the possible paths that can be taken according to the conditions and restrictions described above. Instead of all the possible paths, they may be paths searched within a predetermined time or a predetermined number of paths. The paths may be paths that have been searched for satisfying predetermined criteria.

For example, when t0 is the first time, t20 is the second time, c5 is the first initial position, and c49 is the first arrival position, the paths A and C satisfy the above-described conditions and restrictions, and can be paths that can be taken, respectively.

On the other hand, since the path B does not allow it to be the first arrival position c49 at the second time t20, it does not satisfy the above-described conditions and restrictions and cannot be one of the possible paths.

The path plan may be determined so as to restrict the movement of the first moving object to a path, such as the path B, in which the arrival time to the first arrival position may be later.

Further, when the movement range of the first moving object is larger than a predetermined value, for example, when the passing cell is far away from the arrival position, the movement to the first movement position may be restricted. The restriction of the movement to the first movement position may include, for example, searching so as to lower the probability of the movement to the first movement position.

Next, at step 310, positions not included in any of the first plurality of path plans at each time are determined. The positions not included in any of the paths corresponds to, for example, a cell or a set of cells not included in any of the paths at any time determined at step 308.

The positions not included in any of the above may include a position at a distance longer than the product of the difference between the time and the first time and the velocity of the first moving object, for example, a position where it is obvious that the first moving object cannot reach at the time.

Similarly, the positions not included in either may include a position at a distance longer than the product of the difference between the time and the second time and the velocity of the first moving object, for example, a position where it is obvious that the first moving object cannot reach the first arrival position at the second time.

The positions not included in any of the above may include the first arrival position itself at the time in order to prevent the arrival earlier than necessary and the traffic jam due to the arrival earlier than necessary.

Next, at step 312, at the third time, at least one first movement position is determined, excluding positions at which the first moving object can move after a predetermined time has elapsed from the third time and which are not included in any of the first plurality of path plans.

The third time may be any time between the first time and the second time. The third time may be expressed as a time after an integral multiple of a predetermined unit time from the first time t0, for example, t1 after one step and t2 after two steps.

At least one first movement position is determined, excluding positions that are positions at which a first moving object can move after a predetermined time has elapsed from a third time and that are not included in any of the plurality of first path plans.

For example, when the first time is t0, the second time is t20, the first initial position is c5, and the first arrival position is c49, and the third time is t6, each of the cells c11 and c1 is the position where the first moving object can move to. However, if cell c11 is a position that is not included in any of the first plurality of path plans, cell c11 is not determined to be the first moving position, and no path is searched through cell c11 at t6 or thereafter.

This may suggest that paths passing through cell c11 at t6 cannot reach cell c49 at time t20 in the determined first plurality of path plans, and that no subsequent path search (after t7) is necessary. However, it should be noted that there may be a path that can reach the cell c49 at time t20 if the first plurality of path plans include all possible paths, or if the first plurality of path plans include paths that have been searched within a longer time or include a larger number of paths.

Further, since the cell c11 is not determined as the first movement position, and thus the paths passing through the cell c11 at t6 are not searched, the amount of calculation of the path search may be reduced, the calculation may be terminated earlier, or more paths may be searched.

In this way, paths may be searched step by step until a predetermined end condition is satisfied, such as until a destination position is reached, until a predetermined time has elapsed, or until a predetermined number of paths are searched, by searching for positions that can be moved after one step at any time, and then searching for positions that can be moved after two steps from the positions that can be moved after one step.

The path may be searched step by step until the initial position is reached, a predetermined time has elapsed, or a predetermined number of paths are searched, such that positions that can be moved one step before are searched at any time, and positions that can be moved two steps before are searched from the positions that can be moved one step before.

Furthermore, the path search may be performed from any position at any time, or may be performed simultaneously and in parallel from a plurality of positions at a plurality of times.

Next, at step 314, the path search satisfies a predetermined end condition, and the path plan search method 300 according to the embodiment of the present technology ends.

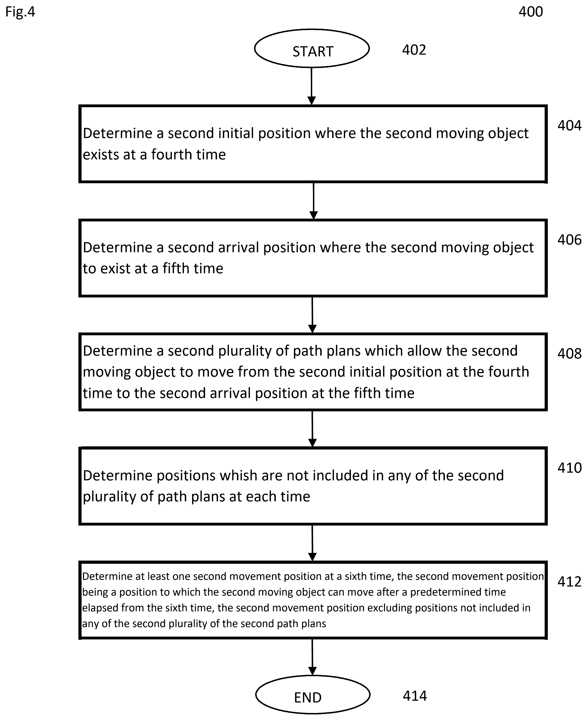

FIG. 4 shows a path plan search method for moving a plurality of moving objects according to an embodiment of the present technology.

The path planning search method 400 according to an embodiment of the present technology may be implemented in combination with or independent of the path planning search method 300 described in FIG. 3.

The path plan search method 400 according to the embodiment of the present technology starts at step 402, and determines a second initial position where the second moving object v2 capable of moving at the second speed exists at a fourth time at step 404.

The fourth time may be the same as or different from the first time.

The second initial position may be determined by the CPU based on the position information recognized by the position sensor 102 of the second moving object v2. The second initial position may be previously input by the I/O device 110 or via the communication device 108. The second speed may be a normal moving speed of the second moving object v2, a maximum speed, or an average speed with acceleration and deceleration taken into account. The second speed may be the same as or different from the first speed of the first moving object v1.

Next, at step 406, a second arrival position where the second moving object v2 exists at a fifth time later than the third time is determined. The second arrival position may be previously input by the I/O device 110 or via the communication device 108.

The fifth time may be the same as or different from the second time.

Next, at step 408, a plurality of second path plans are determined in which the second moving object v2 can move from the second initial position at the fourth time to the second arrival position at the fifth time.

As the second plurality of path plans, the CPU 104 or other computers connected via the communication device 108 search for all of the possible paths that can be taken according to the conditions and restrictions described above. Instead of all the possible paths, they may be paths searched within a predetermined time or a predetermined number of paths. The paths may be paths that have been searched for satisfying predetermined criteria. The second plurality of path plans may be searched by the same CPU or computer as the first plurality of path plans, or may be searched by a different CPU or computer.

For example, when t0 is the fourth time, t16 is the fifth time, c6 is the second initial position, and c50 is the second arrival position, the path D satisfies the above-described conditions and restrictions, and can be a path that can be taken.

Next, at step 410, positions not included in any of the second plurality of path plans at each time are determined. The positions not included in any of the paths corresponds to, for example, a cell or a set of cells not included in any of the paths at any time determined at step 408.

Next, at step 412, at a sixth time, at least one second movement position is determined, excluding positions at which the first moving object can move after a predetermined time has elapsed from the sixth time and which are not included in any of the second plurality of path plans.

The sixth time may be any time between the fourth time and the fifth time. The sixth time may be expressed as a time after an integral multiple of a predetermined unit time from the fourth time t0, for example, t1 after one step and t2 after two steps.

At least one second movement position is determined, excluding positions that are positions at which a second moving object can move after a predetermined time has elapsed from the sixth time and that are not included in any of the plurality of second path plans.

In the case where a plurality of moving objects cannot exist in the same cell, the second moving position may be determined so as not to include the first moving position.

In addition, in the case of preventing unintended contact due to the presence of a plurality of moving objects in adjacent cells, the second moving position may be determined so as not to include positions within a predetermined range from the first moving position.

For example, when t0 is the fourth time, t16 is the fifth time, c6 is the second initial position, and c50 is the second arrival position as described above, when t7 is the sixth time, the cells c11 and c17 are positions where the second moving object can move, respectively. However, if cell c11 is a location that is not included in any of the second plurality of path plans, cell c11 is not determined to be the second moving position, and no path is searched through cell c11 at t7 or thereafter.

This may suggest that the path passing through cell c11 at t7 cannot reach cell c50 at time t16 in the determined second plurality of path plans, and that no subsequent path search (after t8) is necessary. However, it should be noted that there may be a path that can reach cell c50 at time t16 if the second plurality of path plans include all possible paths, or include a path that has been searched within a longer time or includes a larger number of paths.

Further, since the cell c11 is not determined as the second movement position, and thus the path passing through the cell c11 at t7 is not searched, the amount of calculation of the path search may be reduced, the calculation may be terminated earlier, or more paths may be searched.

In this way, paths may be searched step by step until a predetermined end condition is satisfied, such as until a destination position is reached, until a predetermined time has elapsed, or until a predetermined number of paths are searched, by searching for positions that can be moved after one step at any time, and then searching for positions that can be moved after two steps from the positions that can be moved after one step.

The path may be searched step by step until the initial position is reached, a predetermined time has elapsed, or a predetermined number of paths are searched, such that positions that can be moved one step before are searched at any time, and positions that can be moved two steps before are searched from the positions that can be moved one step before.

Furthermore, the path search may be performed from any position at any time, or may be performed simultaneously and in parallel from a plurality of positions at a plurality of times.

Next, at step 414, the path search satisfies a predetermined end condition, and the path plan search method 400 according to the embodiment of the present technology ends.

In the embodiment shown in FIG. 3, when no path plan is found as a result of searching all the possible paths at step 308, as a result of performing a predetermined number of path searches within a predetermined time, or as a result of performing a path search satisfying other predetermined criteria, it may be determined that no path plan in which the first moving object exists at the first arrival position at the second time can be found, and the path plan may be searched by increasing or decreasing the second time by a predetermined time.

In this case, the time for increasing or decreasing may be set within a predetermined range.

When searching for path plans by increasing or decreasing the second time by a predetermined time, a plurality of third path plans which allow the first moving object from the first initial position at the first time to a first arrival position at a seventh time obtained by increasing or decreasing the second time by the predetermined time and representable by pairs of a time and a position may be determined, positions not included in any of the third path plans at each time may be determined, and at least one first movement position excluding positions not included in any of the third path plans and at which the first moving object can move after a predetermined time has elapsed from the eighth time may be determined at an eighth time between the first time and the seventh time.

In the embodiment shown in FIG. 3, when no path plan is found as a result of searching all the possible paths at step 308, as a result of performing a predetermined number of path searches within a predetermined time, or as a result of performing a path search satisfying other predetermined criteria, it may be determined that a path plan for moving to a first arrival position at the second time cannot be found if the first moving object exists at the first initial position at the first time, and the path plan may be searched by increasing or decreasing the first time by a predetermined time.

In this case, the time for increasing or decreasing may be set within a predetermined range.

When searching for path plans by increasing or decreasing the first time by a predetermined time, a plurality of fourth path plans capable of moving the first moving object from the first initial position at a ninth time when the first time is increased or decreased by the predetermined time to the first arrival position at the second time and capable of being represented by pairs of a time and a position may be determined, positions not included in any of the fourth path plans at each time may be determined, and, at least one first movement position excluding positions not included in any of the fourth path plans and at which the first moving object can move after a predetermined time has elapsed from the tenth time may be determined at a tenth time between the ninth time and the second time.

Furthermore, the above-described increase or decrease of the second time and the increase or decrease of the first time may be performed in combination.

The path planning search method according to the present embodiment described in FIGS. 3 and 4 may be implemented by CPU 104 and memory 106 using wired logic, software, or a combination thereof.

### [Industrial Applicability]

According to the present technology, it may be possible to determine an efficient path plan by reducing the amount of calculation of the path search, shortening the time required for the path search, searching more paths, or a combination thereof.

### [Description of Reference Numerals]

100: moving object
102 position sensor
104 CPU
106 Memory
108 communication device
110 I/O device
112 drive mechanism
114 Loading platform
116 LiDAR Sensor

## Claims

1. A method for searching for a path plan for moving a moving object by a computer, the method comprising:
determining a first initial position at which a first moving object capable of moving at a first speed exists at a first time and a first arrival position at which the first moving object to exist at a second time which is later than the first time, respectively;
determining a first plurality of path plans which allow the first moving object to move from the first initial position at the first time to the first arrival position at the second time, the first plurality of path plans being representable by pairs of time and position;
determining positions which are not included in any of the first plurality of path plans at each time; and
determining at least one first movement position at a third time between the first time and the second time, the first movement position being a position to which the first moving object can move after a predetermined time elapsed from the third time, the first movement position excluding positions not included in any of the first plurality of path plans.

2. The method recited in claim 1, wherein the third time is any time between the first time and the second time.

3. The method recited in claim 2, wherein the third time can be expressed as a time after an integral multiple of a predetermined unit time elapsed from the first time.

4. The method recited in claim 1, wherein a range in which the first moving object can move can be displayed in two-dimensional coordinates, and the two-dimensional coordinates can be displayed in coarse-grained two-dimensional coordinates.

5. The method recited in claim 1, wherein a range in which the first moving object can move can be displayed in three-dimensional coordinates, and the three-dimensional coordinates can be displayed in coarse-grained three-dimensional coordinates.

6. The method recited in claim 4, wherein a distance between a cell, which is expressed as a square on a plane, and an adjacent cell corresponds to a distance that the first moving object moves at the first speed in a predetermined time.

7. The method recited in claim 1, wherein determining the first plurality of path plans include searching from any position at any time.

8. The method recited in claim 1, wherein determining the first plurality of path plans include performing searches simultaneously and in parallel from a plurality of positions at a plurality of times.

9. The method recited in claim 1, further comprising:
determining a second initial position where a second moving object capable of moving at a second speed exists at a fourth time and a second arrival position where the second moving object to exist at a fifth time later than the fourth time, respectively;
determining a second plurality of path plans which allow the second moving object to move from the second initial position at the fourth time to the second arrival position at the fifth time, the second plurality of path plans being representable by pairs of time and position;
determining positions which are not included in any of the second plurality of path plans at each time; and
determining at least one second movement position at a sixth time between the fourth time and the fifth time, the second movement position being a position to which the second moving object can move after a predetermined time elapsed from the sixth time, the second movement position excluding positions not included in any of the second plurality of path plans.

10. The method recited in claim 9, wherein the second movement position is determined so as not to include the first movement position.

11. The method recited in claim 9, wherein the second moving position is determined so as not to include positions within a predetermined range from the first moving position.

12. The method recited in claim 1, further comprising:
determining that a path plan in which the first moving object exists at the first arrival position at the second time cannot be found; and
searching the path plan by increasing or decreasing the second time by a predetermined time.

13. The method recited in claim 12, wherein the predetermined time is a time within a predetermined range.

14. The method recited in claim 12, further comprising:
determining a third plurality of path plans capable of moving the first moving object from the first initial position at the first time to the first arrival position at a seventh time obtained by increasing or decreasing the second time by a predetermined time, the third plurality of path plans being representable by pairs of a time and a position;
determining positions which are not included in any of the third plurality of path plans at each time; and
determining at least one first movement position at an eighth time between the first time and the seventh time, the first movement position to which the first moving object can move after a predetermined time elapsed from the eighth time, the first movement position excluding the positions which are not included in any of the third plurality of path plans.

15. The method recited in claim 1, further comprising:
determining that a path plan in which the first moving object exists at the first arrival position at the second time cannot be found; and
searching the path plan by increasing or decreasing the first time by a predetermined time.

16. The method recited in claim 15, further comprising:
determining a fourth plurality of path plans capable of moving the first moving object from the first initial position at a ninth time obtained by increasing or decreasing the first time by a predetermined time to the first arrival position at the second time, the fourth plurality of path plans being representable by pairs of a time and a position;
determining positions which are not included in any of the fourth plurality of path plans at each time; and
determining at least one first movement position at a tenth time between the ninth time and the second time, the first movement position, to which the first moving object can move after a predetermined time elapsed from the tenth time, excluding positions that are not included in any of the fourth plurality of path plans.

17. The method recited in claim 1, wherein the moving object is an Automatic Guided Vehicle capable of transporting articles, and the arrival position includes a position where the articles are loaded or unloaded.

18. The method recited in claim 12, wherein the first moving object is restricted from moving to a path plan that delays the arrival time of the first moving object at the first arrival position.

19. The method recited in claim 18, further comprising:
restricting the movement of the first moving object to the first movement position when a movement range of the first moving object is larger than a predetermined value.

20. The method recited in claim 19, wherein restricting the movement to the first movement position includes searching so as to lower a probability of the movement to the first movement position.

21. The method recited in claim 1, wherein the position which is not included in any of the first plurality of path plans at each time includes a position at a distance longer than a product of a difference between the time and the first time and the speed of the first moving object.

22. The method recited in claim 1, wherein the positions which are not included in any of the first plurality of path plans at each time include a position at a distance longer than a product of a difference between the each time and the second time and the speed of the first moving object.

23. A processor for searching for a path plan for moving a moving object, the processor being configured to:
determine a first initial position at which a first moving object capable of moving at a first speed exists at a first time and a first arrival position at which the first moving object to exist at a second time which is later than the first time, respectively;
determine a first plurality of path plans which allow the first moving object to move from the first initial position at the first time to the first arrival position at the second time, the first plurality of path plans being representable by pairs of time and position;
determine positions which are not included in any of the first plurality of path plans at each time; and
determine at least one first movement position at a third time between the first time and the second time, the first movement position being a position to which the first moving object can move after a predetermined time elapsed from the third time, the first movement position excluding positions not included in any of the first plurality of path plans.

24. A computer-readable medium storing a program for searching for a path plan for moving a moving object, the computer-readable medium cause the computer to perform acts comprising:
determining a first initial position at which a first moving object capable of moving at a first speed exists at a first time and a first arrival position at which the first moving object to exist at a second time which is later than the first time, respectively;
determining a first plurality of path plans which allow the first moving object to move from the first initial position at the first time to the first arrival position at the second time, the first plurality of path plans being representable by pairs of time and position;
determining positions which are not included in any of the first plurality of path plans at each time; and
determining at least one first movement position at a third time between the first time and the second time, the first movement position being a position to which the first moving object can move after a predetermined time elapsed from the third time, the first movement position excluding positions not included in any of the first plurality of path plans.

25. An unmanned transport vehicle including a loading platform capable of loading articles thereon, a drive mechanism, and a processor, wherein the processor is configured to:
determine a first initial position at which a first moving object capable of moving at a first speed exists at a first time and a first arrival position at which the first moving object to exist at a second time which is later than the first time, respectively;
determine a first plurality of path plans which allow the first moving object to move from the first initial position at the first time to the first arrival position at the second time, the first plurality of path plans being representable by pairs of time and position;
determine positions which are not included in any of the first plurality of path plans at each time; and
determine at least one first movement position at a third time between the first time and the second time, the first movement position being a position to which the first moving object can move after a predetermined time elapsed from the third time, the first movement position excluding positions not included in any of the first plurality of path plans.

26. A transport system including at least one moving object having a loading platform capable of loading articles thereon and a drive mechanism, and a processor mounted on the moving object or capable of communicating with the moving object, wherein the processor is configured to:
determine a first initial position at which a first moving object capable of moving at a first speed exists at a first time and a first arrival position at which the first moving object to exist at a second time which is later than the first time, respectively;
determine a first plurality of path plans which allow the first moving object to move from the first initial position at the first time to the first arrival position at the second time, the first plurality of path plans being representable by pairs of time and position;
determine positions which are not included in any of the first plurality of path plans at each time; and
determine at least one first movement position at a third time between the first time and the second time, the first movement position being a position to which the first moving object can move after a predetermined time elapsed from the third time, the first movement position excluding positions not included in any of the first plurality of path plans.
